# FASCICULE DE BREVET EUROPEEN

(11) **EP 3 571 565 B1**
(45) Date de publication et mention de la délivrance du brevet: **21.10.2020**
(21) Numéro de dépôt: 18703055.6
(22) Date de dépôt: 16.01.2018
(51) Int. Cl.: G05D 23/19, G06T 7/00, B60H 1/00

(54) **SYSTÈME DE PRÉ-CONDITIONNEMENT D'UN HABITACLE D'UN VÉHICULE AUTOMOBILE ET PROCÉDÉ DE GESTION ASSOCIE**
SYSTEM ZUR VORBEHANDLUNG EINES INNENRAUMS EINES KRAFTFAHRZEUGS UND ZUGEHÖRIGES VERWALTUNGSVERFAHREN
SYSTEM FOR PRECONDITIONING AN INTERIOR OF A MOTOR VEHICLE AND ASSOCIATED MANAGEMENT METHOD

(30) Priorité: 17.01.2017 FR 1750358
(43) Date de publication de la demande: 27.11.2019
(73) Titulaire: Valeo Systemes Thermiques, 78322 Le Mesnil Saint-Denis Cedex (FR)
(72) Inventeur: NEVEU, Daniel, 78322 Le Mesnil Saint-Denis Cedex (FR); NACER-BEY, Moussa, 78322 Le Mesnil Saint-Denis Cedex (FR); GOUR, Josselin, 78322 Le Mesnil Saint-Denis Cedex (FR)
(74) Mandataire: Tran, Chi-Hai
(86) Numéro de dépôt international: PCT/FR2018/050101
(87) Numéro de publication internationale: WO 2018/134511

(56) Documents cités:
- WO-A1-2017/016784
- FR-A1- 3 040 802
- JP-A- 11 208 246
- JP-A- 2005 047 456
- JP-A- 2006 298 016
- JP-A- 2009 248 797
- JP-A- 2014 113 849

## Description

La présente invention concerne un système de pré-conditionnement d'un habitacle d'un véhicule automobile et plus particulièrement un système permettant la gestion thermique d'un habitacle avant l'arrivée de l'utilisateur.

Dans le domaine automobile, il est connu de pouvoir selon les instructions de l'utilisateur, par exemple via un dispositif de communication sans fil avec le véhicule, de demander une gestion thermique de l'habitacle avant l'arrivée de l'utilisateur afin d'améliorer le confort de ce dernier lorsqu'il entre dans le véhicule automobile.

Des exemples sont divulgués dans les documents: JP2006298016, JP2009248797, JP11208246, JP2005047456etJP2014113849

Cependant, lorsque le véhicule automobile est resté à l'arrêt un certain moment exposé aux conditions extérieures, la température de certaines surfaces de l'habitacle peuvent atteindre des températures pouvant être supérieures ou inférieures à une température seuil au-delà ou en dessous de laquelle le toucher de ladite surface est douloureux pour l'utilisateur. Des systèmes comme présentés ci-dessus, ne permettent une gestion thermique que de l'air ambiant au sein de l'habitacle et peuvent ne pas suffire pour diminuer ou augmenter suffisamment la température des surfaces qui pourront ainsi être douloureuses au toucher.

Un des buts de la présente invention est de remédier au moins partiellement aux inconvénients de l'art antérieur et de proposer un système de pré-conditionnement d'un habitacle d'un véhicule automobile amélioré et son procédé de commande.

La présente invention concerne donc un système de pré-conditionnement pour habitacle de véhicule automobile, ledit système de pré-conditionnement comportant :
∘ une caméra infrarouge ayant dans son angle de champ au moins une zone prédéfinie de l'habitacle,
∘ une installation de chauffage, ventilation et/ou climatisation comprenant au moins une buse de sortie d'air orientable électriquement de sorte à permettre la redirection d'un flux d'air en provenance de l'installation de chauffage, ventilation et/ou climatisation en direction d'une ou de plusieurs zones prédéfinies,
° un dispositif électronique de traitement et d'analyse d'images connecté à la caméra infrarouge et configuré pour :
   ▪ déterminer des valeurs de température de chacune des zones prédéterminées à partir des images de la camera infrarouge,
   ▪ comparer un premier temps, correspondant à un temps défini par l'utilisateur pour réaliser le pré-conditionnement, et un deuxième temps, correspondant au temps nécessaire minimal pour amener la température d'une ou plusieurs zones prédéfinies jusqu'à une température cible associée, ledit deuxième temps étant déterminé en fonction des valeurs de température mesurées desdites zone prédéfinies et en fonction des températures cibles associées à chaque zone prédéterminée,
   ▪ piloter l'installation de chauffage, ventilation et/ou climatisation et orienter la au moins une buse de sortie d'air vers une ou plusieurs zones prédéterminées de sorte que la au moins une zone prédéterminée approche ou atteignent sa température cible associée dans l'intervalle de temps du premier temps.

Le système de pré-conditionnement permet avant l'arrivée de l'utilisateur de réchauffer ou refroidir des zones prédéterminées selon leur température mesurée et le premier temps disponible afin de modifier spécifiquement leur température et limiter l'inconfort de l'utilisateur lorsque celui-ci rentre dans le véhicule et touche une de ces surfaces prédéterminées.

Selon un aspect de l'invention, la caméra infrarouge est une caméra fixe ou une caméra orientable électriquement.

Selon un autre aspect de l'invention, la caméra infrarouge est disposée sur le tableau de bord du véhicule automobile ou au niveau du toit de l'habitacle du véhicule automobile.

Selon un autre aspect de l'invention, les zones prédéfinies comprennent au moins une des zones parmi le groupe de zones suivant : le volant, l'assise du siège conducteur, le dossier du siège conducteur, la partie supérieure de la garniture de portière conducteur et le levier de vitesse.

La présente invention concerne également un procédé de commande d'un système de pré-conditionnement tel que décrit précédemment, ledit procédé comportant les étapes suivantes :
∘ réception d'une demande d'enclenchement du système de pré-conditionnement et détermination d'un premier temps correspondant au temps disponible pour le pré-conditionnement,
∘ prise d'image(s) infrarouge(s) des zones prédéterminées par la caméra infrarouge et mesure de la température de chacune des zones prédéterminées par le dispositif électronique,
∘ détermination par le dispositif électronique d'un deuxième temps correspondant au temps nécessaire minimal pour amener la température d'une ou plusieurs zones prédéfinies jusqu'à une température cible associée et comparaison du premier temps avec un intervalle comprenant le deuxième temps,
∘ pilotage par le dispositif électronique de l'installation de chauffage, ventilation et/ou climatisation et orientation par le dispositif électronique d'au moins une buse de sortie d'air vers au moins une des zones prédéterminées selon le résultat de la comparaison afin qu'au moins une des zones prédéterminées approche ou atteignent sa température cible associée dans l'intervalle de temps du premier temps.

Selon un aspect du procédé selon l'invention, si le résultat de la comparaison entre le premier temps et l'intervalle comprenant le deuxième temps est que le premier temps est supérieur à l'intervalle comprenant le deuxième temps pour que l'ensemble des zones prédéterminées atteignent leurs températures cibles associées, le système de pré-conditionnement est mis en boucle d'attente et le procédé de commande reprend à l'étape de prise d'image infrarouge et de mesure de la température.

Selon un autre aspect du procédé selon l'invention, si le résultat de la comparaison entre le premier temps et l'intervalle comprenant le deuxième temps est que le premier temps est compris dans l'intervalle comprenant le deuxième temps pour que l'ensemble des zones prédéterminées atteignent leurs températures cibles associées, le dispositif électronique pilote l'installation de chauffage, ventilation et/ou climatisation et oriente la au moins une buse de sortie d'air de sorte à amener la température de l'ensemble des zones prédéterminées jusqu'à leurs températures cibles associées.

Selon un autre aspect du procédé selon l'invention, si le résultat de la comparaison entre le premier temps et l'intervalle comprenant le deuxième temps est que le premier temps est inférieur à l'intervalle comprenant le deuxième temps pour que l'ensemble des zones prédéterminées atteignent leurs températures cibles associées, le système de pré-conditionnement pilote l'installation de chauffage, ventilation et/ou climatisation et oriente successivement, selon un ordre pré-établi, la au moins une buse de sortie d'air vers une des zones prédéterminées afin que celle-ci approche ou atteigne sa température cible associée.

Selon un autre aspect du procédé selon l'invention, l'ordre pré-établi est un ordre de priorité des différentes zones prédéterminées selon lequel elles doivent être pré-conditionnées.

Selon un autre aspect du procédé selon l'invention, ledit procédé de commande comporte un contrôle de l'arrivée de l'utilisateur par le dispositif électronique, et où le procédé de commande est arrêté à l'arrivée de l'utilisateur.

Selon un autre aspect du procédé selon l'invention, suite à l'arrivée de l'utilisateur, le procédé de commande est arrêté.

Selon un autre aspect du procédé selon l'invention, suite à l'arrivée de l'utilisateur, le procédé de commande se poursuit pendant un temps déterminé ou jusqu'à un arrêt volontaire de la part de l'utilisateur.

Selon un autre aspect du procédé selon l'invention, la détection de l'arrivée de l'utilisateur se fait par détection de l'ouverture d'une porte du véhicule automobile.

Selon un autre aspect du procédé selon l'invention, la demande d'enclenchement du système de pré-conditionnement est réalisée par un signal d'approche envoyé par l'utilisateur au moyen d'un dispositif de communication sans fil.

Selon un autre aspect du procédé selon l'invention, la demande d'enclenchement est une heure de départ programmée par un utilisateur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un système de pré-conditionnement d'un habitacle d'un véhicule automobile d'un véhicule automobile,
- la figure 2 montre un organigramme des différentes étapes du procédé de fonctionnement du système de pré-conditionnement d'un habitacle d'un véhicule automobile.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

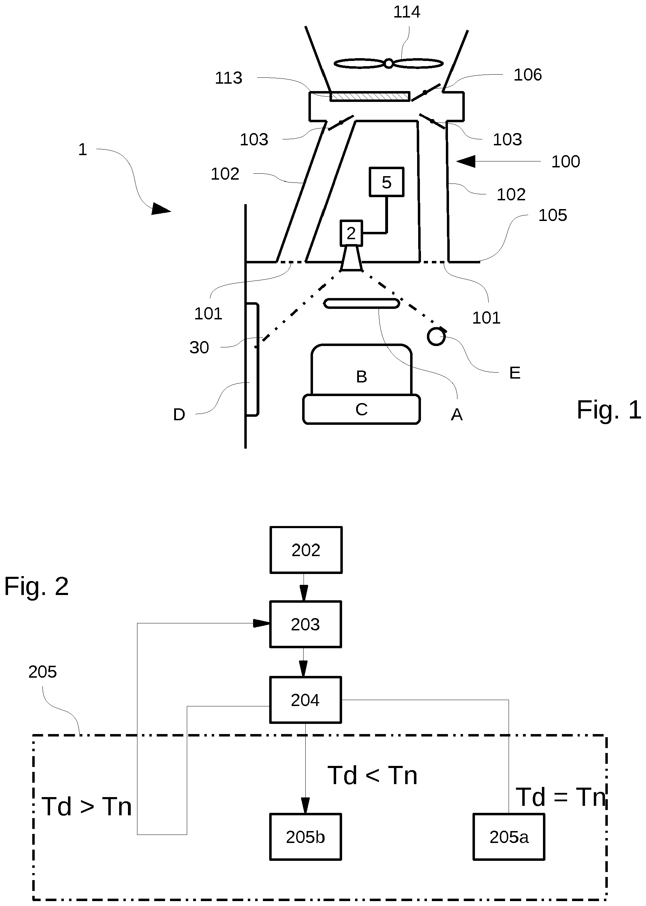

La présente invention concerne un système de pré-conditionnement 1 pour habitacle de véhicule automobile comme illustré sur la figure 1. Ce système de pré-conditionnement 1 comporte notamment :
∘ une caméra infrarouge 2, ayant dans son angle de champ au moins une zone prédéfinie A, B, C, D, E de l'habitacle,
∘ une installation de chauffage, ventilation et/ou climatisation 100 comprenant au moins une buse de sortie d'air 101 orientable électriquement,
∘ un dispositif électronique 5 de traitement et d'analyse d'images connecté à la caméra infrarouge 2.

Par zone prédéfinie A, B, C, D, E de l'habitacle on entend plus particulièrement une zone particulière de l'habitacle susceptible d'être au contact de l'utilisateur et sujette à de fortes variations de température du fait de sa nature et de sa position. Cela peut être plus particulièrement le volant A, l'assise du siège conducteur B, le dossier du siège conducteur C, la partie supérieure de la garniture de portière conducteur D et le levier de vitesse E.

Ces zones prédéfinies A, B, C, D, E ne sont pas limitatives et peuvent également comprendre d'autres éléments comme par exemple le siège passager, les ceintures de sécurité ou un accoudoir central.

La caméra infrarouge 2 est une caméra sensible au spectre infrarouge. Cette caméra infrarouge 2 peut être une caméra fixe et ainsi avoir dans son angle de champ l'ensemble des zones prédéfinies A, B, C, D, E.

La caméra infrarouge 2 peut être par exemple disposée sur le tableau de bord 105 du véhicule automobile. Par exemple, comme illustré sur la figure 1, la caméra peut être disposée au niveau des compteurs du véhicule automobile et ainsi avoir dans son angle de champ le volant A, l'assise du siège conducteur B, le dossier du siège conducteur C, la partie supérieure de la garniture de portière conducteur D et le levier de vitesse E.

Une autre possibilité est de positionner la caméra infrarouge 2 au niveau du toit de l'habitacle du véhicule automobile.

A contrario, la caméra infrarouge 2 peut être une caméra orientable électriquement, notamment par un actionneur électrique. Cette caméra infrarouge 2 orientable peut par un balayage de l'habitacle capturer l'ensemble des zones prédéfinies A, B, C, D, E.

L'installation de chauffage, ventilation et/ou climatisation 100 peut notamment comporter en son sein :
- un échangeur de chaleur 113 d'un circuit de climatisation, afin de gérer la température de l'air le traversant. La quantité d'air traversant l'évaporateur 113 peut être contrôlée via par exemple un volet 106,
- des conduits d'aération 102 qui permettent une redirection de l'air propulsé par le ventilateur 114 vers l'utilisateur 3. Ces conduits d'aération 102 comprennent des volets d'obturation 103,
- un ventilateur 114 afin d'envoyer de l'air au travers dudit échangeur de chaleur 113 et des conduits d'aération 102, et
- au moins une buse de sortie d'air 101, disposée par exemple sur le tableau de bord 105 du véhicule automobile.

L'installation de chauffage, ventilation et/ou climatisation 100 peut également comporter d'autres éléments non représentés tels qu'un dispositif de chauffage électrique ou un échangeur de chaleur supplémentaire configuré pour réchauffer l'air dans le cas d'un circuit de climatisation dit réversible.

L'installation de chauffage, ventilation et/ou climatisation 100 peut également comporter d'autres méthodes de chauffage, comme des systèmes résistifs, ou de refroidissement, comme des systèmes Peltier. Ces systèmes de chauffages ou de refroidissement peuvent être même internes aux éléments des zones prédéfinies A, B, C, D, E.

Les buses de sortie d'air 101 sont plus particulièrement orientables électriquement de sorte à permettre la redirection d'un flux d'air en provenance de l'installation de chauffage, ventilation et/ou climatisation 100 en direction de zones prédéfinies A, B, C, D, E de l'habitacle.

Le dispositif électronique 5 de traitement et d'analyse d'images connecté à la caméra infrarouge 2 est notamment configuré pour :
▪ déterminer des valeurs de température de chacune des zones prédéterminées A, B, C, D, E à partir des images de la camera infrarouge 2,
▪ comparer un premier temps Td, correspondant à un temps défini par l'utilisateur pour réaliser le pré-conditionnement, et un deuxième temps Tn, correspondant au temps nécessaire pour amener la température d'une ou de plusieurs zones prédéfinies A, B, C, D, E jusqu'à une température cible associée,
▪ piloter l'installation de chauffage, ventilation et/ou climatisation 100 et orienter la au moins une buse de sortie d'air 101 vers une ou plusieurs zones prédéterminées A, B, C, D, E de sorte que la au moins une zone prédéterminée A, B, C, D, E approche ou atteignent sa température cible associée dans l'intervalle de temps du premier temps Td.

Le premier temps Td peut être défini comme étant l'intervalle de temps entre le moment où l'utilisateur demande d'enclenchement du système de pré-conditionnement 1 et le moment où il va utiliser le véhicule automobile.

Le deuxième temps Tn est déterminé en fonction des valeurs de température mesurées desdites zone prédéfinies A, B, C, D, E et en fonction des températures cibles associées à chaque zone prédéterminée A, B, C, D, E.

Par piloter l'installation de chauffage, ventilation et/ou climatisation 100, on entend que le dispositif électronique 5 est configuré pour pouvoir déclencher la mise en route ou l'arrêt du ventilateur 114, du circuit de climatisation ou de tout autre dispositif pouvant faire varier la température du flux d'air traversant l'installation de chauffage, ventilation et/ou climatisation 100 ainsi que de contrôler le volet 106. De plus, l'installation de chauffage, ventilation et/ou climatisation 100 peut également contrôler le positionnement des volets d'obturation 103 afin de sélectionner les conduits d'aération 102 dans lesquels va passer le flux d'air et ainsi rediriger et concentrer ledit flux d'air en direction des zones prédéterminées A, B, C, D, E sélectionnées.

La présente invention concerne également un procédé de commande d'un système de pré-conditionnement 1 tel que décrit précédemment. Ce procédé, illustré par l'organigramme de la figure 2, comporte successivement les étapes suivantes :
∘ une étape 202 de réception d'une demande d'enclenchement du système de pré-conditionnement 1 et de détermination d'un premier temps Td correspondant au temps disponible pour le pré-conditionnement,
∘ une étape 203 de prise d'image(s) infrarouge(s) des zones prédéterminées par la caméra infrarouge 2 et de mesure de la température de chacune des zones prédéterminées A, B, C, D, E par le dispositif électronique 5 au moyen desdites images infrarouges,
∘ une étape 204 de détermination par le dispositif électronique 5 d'un deuxième temps Tn, correspondant au temps nécessaire minimal pour amener la température d'une ou plusieurs zones prédéfinies A, B, C, D, E jusqu'à une température cible associée, et comparaison du premier Td avec un intervalle comprenant le deuxième temps Tn,
∘ une étape 205 de pilotage par le dispositif électronique 5 de l'installation de chauffage, ventilation et/ou climatisation 100 et d'orientation par le dispositif électronique 5 d'au moins une buse de sortie d'air 101 vers au moins une des zones prédéterminées A, B, C, D, E selon le résultat de la comparaison afin qu'au moins une des zones prédéterminées A, B, C, D, E approche ou atteignent sa température cible associée dans l'intervalle de temps du premier temps Td.,

Par intervalle comprenant le deuxième temps Tn, on entend aussi bien la valeur exact du deuxième temps Tn qu'une valeur du deuxième temps Tn minorée ou majorée soit par une valeur prédéfinie, par exemple de 10 ou 30 secondes, soit par le temps compris entre deux étapes 203, c'est-à-dire entre deux prises d'images et mesures de la température. Toujours concernant le deuxième temps Tn, on entend par temps nécessaire minimal, le temps nécessaire à l'installation de chauffage, ventilation et/ou climatisation 100 lorsque cette dernière fonctionne à sa puissance maximum pour amener la température d'une ou plusieurs zones prédéfinies A, B, C, D, E jusqu'à leur température cible associée.

Lors de l'étape 205 :
- si le résultat de la comparaison entre le premier temps Td et le deuxième temps Tn est que le premier temps Td est supérieur à l'intervalle comprenant le deuxième temps Tn pour que l'ensemble des zones prédéterminées A, B, C, D, E atteignent leurs températures cibles associées, le système de pré-conditionnement 1 est mis en boucle d'attente et le procédé de commande reprend à l'étape 203 de prise d'image(s) infrarouge(s) et de mesure de la température. Une solution alternative dans ce cas de figure peut également être que le dispositif électronique 5 pilote l'installation de chauffage, ventilation et/ou climatisation 100 à une puissance intermédiaire et oriente la au moins une buse de sortie d'air 101 de sorte à amener la température de l'ensemble des zones prédéterminées A, B, C, D, E jusqu'à leurs températures cibles associées dans l'intervalle du premier temps Td.
- si le résultat de la comparaison entre le premier temps Td et le deuxième temps Tn est que le premier temps Td est compris dans l'intervalle comprenant le deuxième temps Tn pour que l'ensemble des zones prédéterminées A, B, C, D, E atteignent leurs températures cibles associées, le dispositif électronique 5 pilote l'installation de chauffage, ventilation et/ou climatisation 100 et oriente la au moins une buse de sortie d'air 101 de sorte à amener la température de l'ensemble des zones prédéterminées A, B, C, D, E jusqu'à leurs températures cibles associées dans une sous-étape 205a,
- si le résultat de la comparaison entre le premier temps Td et le deuxième temps Tn est que le premier temps Td est inférieur à l'intervalle comprenant le deuxième temps Tn pour que l'ensemble des zones prédéterminées A, B, C, D, E atteignent leurs températures cibles associées, le système de pré-conditionnement 1 pilote l'installation de chauffage, ventilation et/ou climatisation 100 et oriente successivement, selon un ordre pré-établi, la au moins une buse de sortie d'air 101 vers une des zones prédéterminées A, B, C, D, E afin que celle-ci approche ou atteigne sa température cible associée dans une sous-étape 205b.

L'ordre pré-établi est un ordre de priorité des différentes zones prédéterminées A, B, C, D, E selon lequel elles doivent être pré-conditionnées. Les zones prédéfinies A, B, C, D, E peuvent plus particulièrement être prédéfinies et priorisées lors des paramétrages d'usine. Cela peut être réalisé une unique fois lors du montage et du paramétrage du système de pré-conditionnement 1. La priorisation des zones prédéfinies A, B, C, D, E peut notamment se faire en fonction de la probabilité de contact direct avec la peau de l'utilisateur.

Par exemple, la première zone prédéfinie peut être le volant A, la deuxième peut être l'assise du siège conducteur B, la troisième peut être le dossier du siège conducteur C, la quatrième peut être la partie supérieure de la garniture de portière conducteur D et la cinquième peut être le levier de vitesse E.

La température cible peut plus particulièrement être un maximum et un minimum de température que peut atteindre la ou les zones prédéfinies A, B, C, D, E. La température cible maximum peut correspondre à une température seuil au-delà de laquelle le toucher devient désagréable voir douloureux, par exemple de l'ordre de 45°C. La température cible minimum peut correspondre à une température seuil au-dessous de laquelle le toucher devient désagréable voir douloureux, par exemple de l'ordre de 10°C.

Ainsi, lors de l'étape 203, dans le cas où :
- le dispositif électronique 5 repère une zone prédéterminée A, B, C, D, E , par exemple le volant A, qui a une température supérieure à sa température cible maximum associée, et
- le premier temps Td est inférieur ou égal au deuxième temps Tn nécessaire pour diminuer la température du volant A jusqu'à sa température cible maximum,
alors le dispositif électronique 5 pilote l'installation de chauffage, ventilation et/ou climatisation 100, et oriente la ou les buses de sortie d'air 101 vers le volant A de sorte à refroidir le volant A jusqu'à sa température cible maximum associée. Cela peut être notamment le cas lors de journées chaudes et d'une exposition prolongée au soleil à l'arrêt. Dans ces conditions, la température du volant A peut atteindre des températures de l'ordre de 80°C.

De même, lors de l'étape 203, dans le cas où :
- le dispositif électronique 5 repère une zone prédéterminée, par exemple le volant A, qui a une température inférieure à sa température cible minimum associée, et
- le premier temps Td est inférieur ou égal au deuxième temps Tn nécessaire pour augmenter la température du volant A jusqu'à sa température cible minimum,
alors le dispositif électronique 5 pilote l'installation de chauffage, ventilation et/ou climatisation 100, et oriente la ou les buses de sortie d'air 101 vers le volant A de sorte à la réchauffer le volant A jusqu'à sa température cible minimum associée.

La demande d'enclenchement lors de l'étape 202 peut être de différentes natures. Cela peut être par exemple une activation d'approche de l'utilisateur pour un pré-conditionnement rapide selon l'ordre de priorisation pré-établi des zones prédéterminées A, B, C, D, E.

Cette activation d'approche de l'utilisateur pour un pré-conditionnement rapide peut être notamment réalisée par un signal d'approche envoyé par l'utilisateur au moyen d'un dispositif de communication sans fil, par exemple par une application sur un smartphone ou une clé électronique communiquant à distance avec le véhicule automobile.

Selon une alternative, la demande d'enclenchement peut être une heure de départ programmée par un utilisateur. Cette programmation peut être réalisée via une application sur un smartphone ou encore via une interface utilisateur présente sur le tableau de bord 105.

Le procédé de commande peut également comporter un contrôle de l'arrivée de l'utilisateur par le dispositif électronique 5. Si l'arrivée de l'utilisateur est détectée, le procédé de commande est arrêté. La détection de l'arrivée de l'utilisateur peut notamment se faire par détection de l'ouverture d'une porte du véhicule automobile.

Le procédé de commande peut néanmoins se poursuive pendant un temps déterminé, par exemple de l'ordre de une à deux minutes, ou jusqu'à un arrêt volontaire de la part de l'utilisateur, sur des zones privilégiées comme par exemple le volant ou le levier de vitesse.

Il est également possible d'imaginer que la demande d'enclenchement est une activation d'une commande de pré-conditionnement rapide. Cette commande de pré-conditionnement rapide enclenche le système de pré-conditionnement 1 pendant un temps donné, par exemple pendant un temps inférieur à dix minutes. Le système de pré-conditionnement pilote l'installation de chauffage, ventilation et/ou climatisation 100 à son maximum et oriente successivement, selon un ordre pré-établi, la au moins une buse de sortie d'air 101 vers une des zones prédéterminées A, B, C, D, E afin que celle-ci approche ou atteigne sa température cible associée.

Ainsi, on voit bien que le système de pré-conditionnement et son procédé de commande permettent avant l'arrivée de l'utilisateur de réchauffer ou refroidir des zones prédéterminées A, B, C, D, E selon leur température mesurée et le premier temps Td disponible afin de modifier spécifiquement leur température et limiter l'inconfort de l'utilisateur lorsque celui-ci rentre dans le véhicule et touche une de ces surfaces prédéterminées A, B, C, D, E. La priorisation des zones prédéterminées A, B, C, D, E permet notamment de maximiser l'efficacité du système en faisant en sorte qu'il se concentre sur les zones prioritaires si le premier temps Td est court.

## Revendications

1. Système de pré-conditionnement (1) pour habitacle de véhicule automobile, ledit système de pré-conditionnement (1) comportant :
∘ une caméra infrarouge (2) ayant dans son angle de champ au moins une zone prédéfinie (A, B, C, D, E) de l'habitacle,
∘ une installation de chauffage, ventilation et/ou climatisation (100) comprenant au moins une buse de sortie d'air (101) orientable électriquement de sorte à permettre la redirection d'un flux d'air en provenance de l'installation de chauffage, ventilation et/ou climatisation (100) en direction d'une ou de plusieurs zones prédéfinies (A, B, C, D, E),
∘ un dispositif électronique (5) de traitement et d'analyse d'images connecté à la caméra infrarouge (2) et configuré pour :
▪ déterminer des valeurs de température de chacune des zones prédéterminées (A, B, C, D, E) à partir des images de la camera infrarouge (2),
▪ comparer un premier temps (Td), correspondant à un temps défini par l'utilisateur pour réaliser le pré-conditionnement, et un deuxième temps (Tn), correspondant au temps nécessaire minimal pour amener la température d'une ou plusieurs zones prédéfinies (A, B, C, D, E) jusqu'à une température cible associée, ledit deuxième temps (Tn) étant déterminé en fonction des valeurs de température mesurées desdites zone prédéfinies (A, B, C, D, E) et en fonction des températures cibles associées à chaque zone prédéterminée (A, B, C, D, E),
▪ piloter l'installation de chauffage, ventilation et/ou climatisation (100) et orienter la au moins une buse de sortie d'air (101) vers une ou plusieurs zones prédéterminées (A, B, C, D, E) de sorte que la au moins une zone prédéterminée (A, B, C, D, E) approche ou atteignent sa température cible associée dans l'intervalle de temps du premier temps (Td).

2. Système de pré-conditionnement (1) selon la revendication précédente, **caractérisé en ce que** la caméra infrarouge (2) est une caméra fixe.

3. Système de pré-conditionnement (1) selon la revendication 1, **caractérisé en ce que** la caméra infrarouge (2) est une caméra orientable électriquement.

4. Système de pré-conditionnement (1) selon l'une des revendications précédentes, **caractérisé en ce que** la caméra infrarouge (2) est disposée sur le tableau de bord (105) du véhicule automobile.

5. Système de pré-conditionnement (1) selon l'une des revendications 1 à 3, **caractérisé en ce que** la caméra infrarouge (2) est disposée au niveau du toit de l'habitacle du véhicule automobile.

6. Système de pré-conditionnement (1) selon l'une des revendications précédentes, **caractérisé en ce que** les zones prédéfinies (A, B, C, D, E) comprennent au moins une des zones parmi le groupe de zones suivant : le volant (A), l'assise du siège conducteur (B), le dossier du siège conducteur (C), la partie supérieure de la garniture de portière conducteur (D) et le levier de vitesse (E).

7. Procédé de commande d'un système de pré-conditionnement (1) selon l'une des revendications précédentes, ledit procédé comportant les étapes suivantes :
∘ réception d'une demande d'enclenchement du système de pré-conditionnement (1) et détermination d'un premier temps (Td) correspondant au temps disponible pour le pré-conditionnement,
∘ prise d'image(s) infrarouge(s) des zones prédéterminées par la caméra infrarouge (2) et mesure de la température de chacune des zones prédéterminées (A, B, C, D, E) par le dispositif électronique (5),
∘ détermination par le dispositif électronique (5) d'un deuxième temps (Tn) correspondant au temps nécessaire minimal pour amener la température d'une ou plusieurs zones prédéfinies (A, B, C, D, E) jusqu'à une température cible associée et comparaison du premier temps (Td) avec un intervalle comprenant le deuxième temps (Tn),
° pilotage par le dispositif électronique (5) de l'installation de chauffage, ventilation et/ou climatisation (100) et orientation par le dispositif électronique (5) d'au moins une buse de sortie d'air (101) vers au moins une des zones prédéterminées (A, B, C, D, E) selon le résultat de la comparaison afin qu'au moins une des zones prédéterminées (A, B, C, D, E) approche ou atteignent sa température cible associée dans l'intervalle de temps du premier temps (Td).

8. Procédé de commande selon la revendication 7, **caractérisé en ce que** si le résultat de la comparaison entre le premier temps (Td) et l'intervalle comprenant le deuxième temps (Tn) est que le premier temps (Td) est supérieur à l'intervalle comprenant le deuxième temps (Tn) pour que l'ensemble des zones prédéterminées (A, B, C, D, E) atteignent leurs températures cibles associées, le système de pré-conditionnement (1) est mis en boucle d'attente et le procédé de commande reprend à l'étape de prise d'image infrarouge et de mesure de la température.

9. Procédé de commande selon la revendication 7, **caractérisé en ce que** si le résultat de la comparaison entre le premier temps (Td) et l'intervalle comprenant le deuxième temps (Tn) est que le premier temps (Td) est compris dans l'intervalle comprenant le deuxième temps (Tn) pour que l'ensemble des zones prédéterminées (A, B, C, D, E) atteignent leurs températures cibles associées, le dispositif électronique (5) pilote l'installation de chauffage, ventilation et/ou climatisation (100) et oriente la au moins une buse de sortie d'air (101) de sorte à amener la température de l'ensemble des zones prédéterminées (A, B, C, D, E) jusqu'à leurs températures cibles associées.

10. Procédé de commande selon la revendication 7, **caractérisé en ce que** si le résultat de la comparaison entre le premier temps (Td) et l'intervalle comprenant le deuxième temps (Tn) est que le premier temps (Td) est inférieur à l'intervalle comprenant le deuxième temps (Tn) pour que l'ensemble des zones prédéterminées (A, B, C, D, E) atteignent leurs températures cibles associées, le système de pré-conditionnement (1) pilote l'installation de chauffage, ventilation et/ou climatisation (100) et oriente successivement, selon un ordre pré-établi, la au moins une buse de sortie d'air (101) vers une des zones prédéterminées (A, B, C, D, E) afin que celle-ci approche ou atteigne sa température cible associée.

11. Procédé de commande selon la revendication 10, **caractérisé en ce que** l'ordre pré-établi est un ordre de priorité des différentes zones prédéterminées (A, B, C, D, E) selon lequel elles doivent être pré-conditionnées.

12. Procédé de commande selon l'une des revendications 7 à 10, **caractérisé en ce qu'**il comporte un contrôle de l'arrivée de l'utilisateur par le dispositif électronique (5).

13. Procédé de commande selon la revendication 10, **caractérisé en ce que**, suite à l'arrivée de l'utilisateur, le procédé de commande est arrêté.

14. Procédé de commande selon la revendication 10, **caractérisé en ce que**, suite à l'arrivée de l'utilisateur, le procédé de commande se poursuit pendant un temps déterminé ou jusqu'à un arrêt volontaire de la part de l'utilisateur.

15. Procédé de commande selon l'une des revendications 12 à 14, **caractérisé en ce que** la détection de l'arrivée de l'utilisateur se fait par détection de l'ouverture d'une porte du véhicule automobile.

16. Procédé de commande selon l'une des revendications 7 à 13, **caractérisé en ce que** la demande d'enclenchement du système de pré-conditionnement (1) est réalisée par un signal d'approche envoyé par l'utilisateur au moyen d'un dispositif de communication sans fil.

17. Procédé de commande selon l'une des revendications 7 à 13, **caractérisé en ce que** la demande d'enclenchement est une heure de départ programmée par un utilisateur.

## Patentansprüche

1. Vorkonditionierungssystem (1) für eine Kraftfahrzeug-Fahrgastzelle, das Vorkonditionierungssystem (1) aufweisend:
- eine Infrarotkamera (2) mit mindestens einem vorbestimmten Bereich (A, B, C, D, E) der Fahrgastzelle in ihrem Sichtfeld,
- eine Heizungs-, Lüftungs- und/oder Klimatisierungsanlage (100) umfassend mindestens eine Luftauslassdüse (101), die elektrisch ausrichtbar ist, um die Umlenkung eines Luftstroms von der Heizungs-, Lüftungs- und/oder Klimatisierungsanlage (100) in Richtung eines oder mehrerer vorbestimmter Bereiche (A, B, C, D, E) zu erlauben,
- eine elektronische Bildverarbeitungs- und - analysevorrichtung (5), die an die Infrarotkamera (2) angeschlossen ist und dazu ausgebildet ist:
▪ Temperaturwerte jedes der vorbestimmten Bereiche (A, B, C, D, E) anhand der Bilder der Infrarotkamera (2) zu bestimmen,
▪ eine erste Zeit (Td), die einer Zeit entspricht, die vom Benutzer festgelegt wird, um die Vorkonditionierung durchzuführen, und eine zweite Zeit (Tn), die der minimalen notwendigen Zeit entspricht, um die Temperatur eines oder mehrerer vorbestimmter Bereiche (A, B, C, D, E) auf eine zugehörige Zieltemperatur zu bringen, zu vergleichen, wobei die zweite Zeit (Tn) in Abhängigkeit von den gemessenen Temperaturwerten der vorbestimmten Bereiche (A, B, C, D, E) und in Abhängigkeit von den Zieltemperaturen, die zu jedem vorbestimmten Bereich (A, B, C, D, E) gehören, bestimmt wird,
▪ die Heizungs-, Lüftungs- und/oder Klimatisierungsanlage (100) zu steuern und die mindestens eine Luftauslassdüse (101) auf einen oder mehrere vorbestimmte Bereiche (A, B, C, D, E) auszurichten, damit sich der mindestens eine vorbestimmte Bereich (A, B, C, D, E) im Zeitintervall der ersten Zeit (Td) seiner zugehörigen Zieltemperatur annähert oder diese erreicht.

2. Vorkonditionierungssystem (1) nach dem vorhergehenden Anspruch, **dadurch gekennzeichnet, dass** die Infrarotkamera (2) eine feste Kamera ist.

3. Vorkonditionierungssystem (1) nach Anspruch 1, **dadurch gekennzeichnet, dass** die Infrarotkamera (2) eine elektrisch ausrichtbare Kamera ist.

4. Vorkonditionierungssystem (1) nach einem der vorhergehenden Ansprüche, **dadurch gekennzeichnet, dass** die Infrarotkamera (2) auf dem Armaturenbrett (105) des Kraftfahrzeugs angeordnet ist.

5. Vorkonditionierungssystem (1) nach einem der Ansprüche 1 bis 3, **dadurch gekennzeichnet, dass** die Infrarotkamera (2) auf Höhe des Dachs der Fahrgastzelle des Kraftfahrzeugs angeordnet ist.

6. Vorkonditionierungssystem (1) nach einem der vorhergehenden Ansprüche, **dadurch gekennzeichnet, dass** die vorbestimmten Bereiche (A, B, C, D, E) mindestens einen der Bereiche aus der folgenden Gruppe von Bereichen umfassen: das Lenkrad (A), die Sitzfläche des Fahrersitzes (B), die Rücklehne des Fahrersitzes (C), den oberen Abschnitt der Fahrertürverkleidung (D) und den Schalthebel (E).

7. Verfahren zur Steuerung eines Vorkonditionierungssystems (1) nach einem der vorhergehenden Ansprüche, das Verfahren aufweisend die folgenden Schritte:
- Empfangen einer Anforderung zur Einschaltung des Vorkonditionierungssystems (1) und Bestimmen einer ersten Zeit (Td), die der Zeit entspricht, die für die Vorkonditionierung verfügbar ist,
- Aufnehmen eines oder mehrerer Infrarotbilder der vorbestimmten Bereiche durch die Infrarotkamera (2) und Messen der Temperatur jedes der vorbestimmten Bereiche (A, B, C, D, E) durch die elektronische Vorrichtung (5),
- Bestimmen, durch die elektronische Vorrichtung (5), einer zweiten Zeit (Tn), die der minimalen notwendigen Zeit entspricht, um die Temperatur eines oder mehrerer vorbestimmter Bereiche (A, B, C, D, E) auf eine zugehörige Zieltemperatur zu bringen, und Vergleichen der ersten Zeit (Td) mit einem Intervall, das die zweite Zeit (Tn) umfasst,
- Steuern, durch die elektronische Vorrichtung (5), der Heizungs-, Lüftungs- und/oder Klimatisierungsanlage (100) und Ausrichten, durch die elektronische Vorrichtung (5), mindestens einer Luftauslassdüse (101) auf mindestens einen der vorbestimmten Bereiche (A, B, C, D, E) je nach dem Ergebnis des Vergleichs, damit sich mindestens einer der vorbestimmten Bereiche (A, B, C, D, E) im Zeitintervall der ersten Zeit (Td) seiner zugehörigen Zieltemperatur annähert oder diese erreicht.

8. Steuerungsverfahren nach Anspruch 7, **dadurch gekennzeichnet, dass**, wenn das Ergebnis des Vergleichs zwischen der ersten Zeit (Td) und dem Intervall, das die zweite Zeit (Tn) umfasst, so ist, dass die erste Zeit (Td) größer als das Intervall ist, das die zweite Zeit (Tn) umfasst, damit die Gesamtheit der vorbestimmten Bereiche (A, B, C, D, E) ihre zugehörigen Zieltemperaturen erreichen, das Vorkonditionierungssystem (1) in eine Warteschleife gestellt wird und das Steuerungsverfahren wieder beim Schritt des Aufnehmens von Infrarotbildern und des Messens der Temperatur beginnt.

9. Steuerungsverfahren nach Anspruch 7, **dadurch gekennzeichnet, dass**, wenn das Ergebnis des Vergleichs zwischen der ersten Zeit (Td) und dem Intervall, das die zweite Zeit (Tn) umfasst, so ist, dass die erste Zeit (Td) im Intervall enthalten ist, das die zweite Zeit (Tn) umfasst, damit die Gesamtheit der vorbestimmten Bereiche (A, B, C, D, E) ihre zugehörigen Zieltemperaturen erreichen, die elektronische Vorrichtung (5) die Heizungs-, Lüftungs- und/oder Klimatisierungsanlage (100) so steuert und die mindestens eine Luftauslassdüse (101) so ausrichtet, dass die Temperatur der Gesamtheit der vorbestimmten Bereiche (A, B, C, D, E) auf ihre zugehörigen Zieltemperaturen gebracht wird.

10. Steuerungsverfahren nach Anspruch 7, **dadurch gekennzeichnet, dass**, wenn das Ergebnis des Vergleichs zwischen der ersten Zeit (Td) und dem Intervall, das die zweite Zeit (Tn) umfasst, so ist, dass die erste Zeit (Td) kleiner als das Intervall ist, das die zweite Zeit (Tn) umfasst, damit die Gesamtheit der vorbestimmten Bereiche (A, B, C, D, E) ihre zugehörigen Zieltemperaturen erreichen, das Vorkonditionierungssystem (1) die Heizungs-, Lüftungs- und/oder Klimatisierungsanlage (100) steuert und die mindestens eine Luftauslassdüse (101) nacheinander gemäß einer vorgegebenen Reihenfolge auf einen der vorbestimmten Bereiche (A, B, C, D, E) ausrichtet, damit sich dieser seiner zugehörigen Zieltemperatur annähert oder diese erreicht.

11. Steuerungsverfahren nach Anspruch 10, **dadurch gekennzeichnet, dass** die vorbestimmte Reihenfolge eine Rangfolge der verschiedenen vorbestimmten Bereiche (A, B, C, D, E) ist, nach welcher sie vorkonditioniert werden sollen.

12. Steuerungsverfahren nach einem der Ansprüche 7 bis 10, **dadurch gekennzeichnet, dass** es eine Kontrolle der Ankunft des Benutzers durch die elektronische Vorrichtung (5) aufweist.

13. Steuerungsverfahren nach Anspruch 10, **dadurch gekennzeichnet, dass** das Steuerungsverfahren nach der Ankunft des Benutzers angehalten wird.

14. Steuerungsverfahren nach Anspruch 10, **dadurch gekennzeichnet, dass** das Steuerungsverfahren nach der Ankunft des Benutzers während einer bestimmten Zeit oder bis zu einem absichtlichen Anhalten seitens des Benutzers weiter läuft.

15. Steuerungsverfahren nach einem der Ansprüche 12 bis 14, **dadurch gekennzeichnet, dass** das Erkennen der Ankunft des Benutzers durch Erkennen des Öffnens einer Tür des Kraftfahrzeugs erfolgt.

16. Steuerungsverfahren nach einem der Ansprüche 7 bis 13, **dadurch gekennzeichnet, dass** die Anforderung zur Einschaltung des Vorkonditionierungssystems (1) durch ein Annäherungssignal durchgeführt wird, das vom Benutzer mittels einer drahtlosen Kommunikationsvorrichtung gesendet wird.

17. Steuerungsverfahren nach einem der Ansprüche 7 bis 13, **dadurch gekennzeichnet, dass** die Anforderung zur Einschaltung eine Abfahrtszeit ist, die von einem Benutzer programmiert wurde.

## Claims

1. Preconditioning system (1) for a motor vehicle interior, said preconditioning system (1) comprising:
° an infrared camera (2) that has, in its field angle, at least one predefined zone (A, B, C, D, E) of the interior,
° a heating, ventilation and/or air-conditioning installation (100) comprising at least one air outlet nozzle (101) that is electrically steerable so as to allow a flow of air originating from the heating, ventilation and/or air-conditioning installation (100) to be redirected towards one or more predefined zones (A, B, C, D, E),
° an electronic image processing and analysis device (5) connected to the infrared camera (2) and configured to:
• determine temperature values of each of the predetermined zones (A, B, C, D, E) from the images from the infrared camera (2),
• compare a first time (Td), corresponding to a time defined by the user to perform the preconditioning, and a second time (Tn), corresponding to the minimum time needed to bring the temperature of one or more predefined zones (A, B, C, D, E) to an associated target temperature, said second time (Tn) being determined as a function of the measured temperature values of said predefined zones (A, B, C, D, E) and as a function of the target temperatures associated with each predetermined zone (A, B, C, D, E),
• drive the heating, ventilation and/or air-conditioning installation (100) and steer the at least one air outlet nozzle (101) towards one or more predetermined zones (A, B, C, D, E) so that the at least one predetermined zone (A, B, C, D, E) approaches or reaches its associated target temperature within the time interval of the first time (Td).

2. Preconditioning system (1) according to the preceding claim, **characterized in that** the infrared camera (2) is a fixed camera.

3. Preconditioning system (1) according to Claim 1, **characterized in that** the infrared camera (2) is an electrically-steerable camera.

4. Preconditioning system (1) according to one of the preceding claims, **characterized in that** the infrared camera (2) is arranged on the dashboard (105) of the motor vehicle.

5. Preconditioning system (1) according to one of Claims 1 to 3, **characterized in that** the infrared camera (2) is arranged in the roof of the interior of the motor vehicle.

6. Preconditioning system (1) according to one of the preceding claims, **characterized in that** the predefined zones (A, B, C, D, E) comprise at least one of the zones out of the following group of zones: steering wheel (A), the base of the driver's seat (B), the back of the driver's seat (C), the upper part of the driver's door lining (D) and the gear shift lever (E).

7. Method for controlling a preconditioning system (1) according to one of the preceding claims, said method comprising the following steps:
° reception of a request to trigger the preconditioning system (1) and determination of a first time (Td) corresponding to the time available for the preconditioning,
° capture of one or more infrared images of the predetermined zones by the infrared camera (2) and measurement of the temperature of each of the predetermined zones (A, B, C, D, E) by the electronic device (5),
° determination by the electronic device (5) of a second time (Tn) corresponding to the minimum time needed to bring the temperature of one or more predefined zones (A, B, C, D, E) to an associated target temperature and comparison of the first time (Td) with an interval comprising the second time (Tn),
° driving by the electronic device (5) of the heating, ventilation and/or air-conditioning installation (100) and steering, by the electronic device (5), of at least one air outlet nozzle (101) to at least one of the predetermined zones (A, B, C, D, E) according to the result of the comparison in order for at least one of the predetermined zones (A, B, C, D, E) to approach or reach its associated target temperature within the time interval of the first time (Td).

8. Control method according to Claim 7, **characterized in that**, if the result of the comparison between the first time (Td) and the interval comprising the second time (Tn) is that the first time (Td) is greater than the interval comprising the second time (Tn) for all of the predetermined zones (A, B, C, D, E) to reach their associated target temperatures, the preconditioning system (1) is placed in a waiting loop and the control method repeats the step of infrared image capture and of temperature measurement.

9. Control method according to Claim 7, **characterized in that**, if the result of the comparison between the first time (Td) and the interval comprising the second time (Tn) is that the first time (Td) is contained within the interval comprising the second time (Tn) for all of the predetermined zones (A, B, C, D, E) to reach their associated target temperatures, the electronic device (5) drives the heating, ventilation and/or air-conditioning installation (100) and steers the at least one air outlet nozzle (101) so as to bring the temperature of all of the predetermined zones (A, B, C, D, E) to their associated target temperatures.

10. Control method according to Claim 7, **characterized in that**, if the result of the comparison between the first time (Td) and the interval comprising the second time (Tn) is that the first time (Td) is less than the interval comprising the second time (Tn) for all of the predetermined zones (A, B, C, D, E) to reach their associated target temperatures, the preconditioning system (1) drives the heating, ventilation and/or air-conditioning installation (100) and steers, in succession, in a pre-established order, the at least one air outlet nozzle (101) towards one of the predetermined zones (A, B, C, D, E) in order for the latter to approach or reach its associated target temperature.

11. Control method according to Claim 10, **characterized in that** the pre-established order is an order of priority of the different predetermined zones (A, B, C, D, E) according to which they must be preconditioned.

12. Control method according to one of Claims 7 to 10, **characterized in that** it comprises a check on the arrival of the user by the electronic device (5).

13. Control method according to Claim 10, **characterized in that**, following the arrival of the user, the control method is stopped.

14. Control method according to Claim 10, **characterized in that**, following the arrival of the user, the control method is continued for a determined time or until it is deliberately stopped by the user.

15. Control method according to one of Claims 12 to 14, **characterized in that** the detection of the arrival of the user is done by detecting the opening of a door of the motor vehicle.

16. Control method according to one of Claims 7 to 13, **characterized in that** the request to trigger the preconditioning system (1) is performed by an approach signal sent by the user by means of a wireless communication device.

17. Control method according to one of Claims 7 to 13, **characterized in that** the trigger request is a departure time programmed by a user.
